# EUROPÄISCHE PATENTSCHRIFT

(11) **EP 0 523 532 B1**
(45) Veröffentlichungstag und Bekanntmachung des Hinweises auf die Patenterteilung: **01.10.1997**
(21) Anmeldenummer: 92111596.0
(22) Anmeldetag: 08.07.1992
(51) Int. Cl.: C09B 7/02, C09B 67/54

(54) **Verfahren zur Reinigung von Indigo**
Method of purification of indigo
Procédé de purification de l'indigo

(30) Priorität: 17.07.1991 US 731657
(43) Veröffentlichungstag der Anmeldung: 20.01.1993
(73) Patentinhaber: BASF Aktiengesellschaft, 67063 Ludwigshafen (DE)
(72) Erfinder: Kohlhaupt, Reinhold, Dr., W-6710 Frankenthal (DE); Bieg, Walter, W-6718 Grünstadt (DE); Lang, Ernst, Dr., W-6706 Wachenheim (DE)

(56) Entgegenhaltungen:
- VENKATARAMAN 'chemistry of synthetic dyes' 1952 , ACADEMIC PRESS , NEW-YORK * Band 2, Abschnitt XXIII, Seiten 1013-1016 *

## Beschreibung

Indigo, der mengenmäßig weltweit größte synthetische Textilfarbstoff, enthält trotz ausgereifter Produktionsverfahren noch Verunreinigungen, so z.B. bis zu 0,6 Gew.-% Anilin und 0,4 Gew.-% N-Methylanilin. Ferner sind in noch geringeren Mengen weitere Verbindungen enthalten, die man gerne entfernen möchte.

Es war daher Aufgabe der vorliegenden Erfindung, ein wirkungsvolles und wirtschaftliches Verfahren zur Reinigung von Indigo zu entwickeln, nach welchem der Farbstoff frei oder zumindest sehr weitgehend frei von aromatischen Aminen und anderen Verunreinigungen erhalten wird.

Versuche, die im Indigo vorhandenen aromatischen Amine durch bekannte Reinigungsverfahren, z.B. durch Waschen oder durch Ausrühren mit verdünnten Säuren, durch Wasserdampfdestillation oder durch Extraktion mit organischen Lösemitteln zu entfernen, waren bisher nicht erfolgreich, selbst nicht mit feinstgemahlenem Farbstoff.

Da mit diesen Reinigungsverfahren selbst nach intensiver Mahlung des Farbstoffes keine Abreicherung von Anilin und N-Methylanilin zu erzielen ist, müssen diese Verunreinigungen im Indigo-Kristallgefüge fest eingeschlossen sein.

Bei allen bekannten technischen Verfahren zur Herstellung von Indigo z.B. The Chemistry of Synthetic Dyes, K. Venkataraman Academic Press, 1952, New York, San Francisco, London, BandII, Seiten 1013-1014 wird dieser Farbstoff in einem letzten Syntheseschritt durch Luftoxidation von wäßrig alkalischer Indoxylatlösung gewonnen.

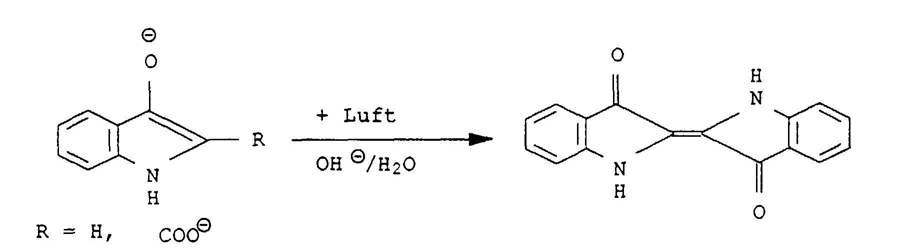

Es wurde nun gefunden, daß man sehr weitgehend gereinigten Indigo in guter Ausbeute erhält, wenn man aus der bei der Synthese anfallenden wäßrig alkalischen Indoxylatlösung vor ihrer Oxidation zu Indigo die aromatischen Amine mittels Wasserdampf oder eines Inertgases entfernt und den anschließend in bekannter Weise durch Oxidation der gestrippten Indoxylatlösung erhaltenen Indigo einer Wasserstoffperoxidbehandlung unterzieht.

Als Inertgas sind z.B. Edelgase oder vorzugsweise Stickstoff zu nennen.

Auch ohne vorherige Anilinabreicherung durch Strippung der Indoxylatlösung können andere Verunreinigungen des technischen Indigos durch Wasserstoffperoxidbehandlung zerstört werden.

Um eine möglichst quantitative Entfernung der Verunreinigungen aus der Indoxylatlösung zu sichern, ist es sehr wichtig, die Strippung unter strengem Sauerstoffausschluß vorzunehmen, was vorteilhaft durch Arbeiten unter Stickstoff erzielt wird.

Bereits geringste Sauerstoffmengen reagieren nämlich mit dem gelösten Indoxylat unter Bildung von Indigo, der dann z.B. Anilin und N-Methylanilin irreversibel einschließt.

Um die durch Selbstkondensation von Indoxylat ablaufende, literaturbekannte, die Qualität und die Ausbeute von Indigo mindernde Bildung von Indoxylrot (I) zu vermeiden, führt man die Strippung zweckmäßigerweise bei Temperaturen von 55 bis 90°C, bevorzugt bei 65 bis 80°C, durch.

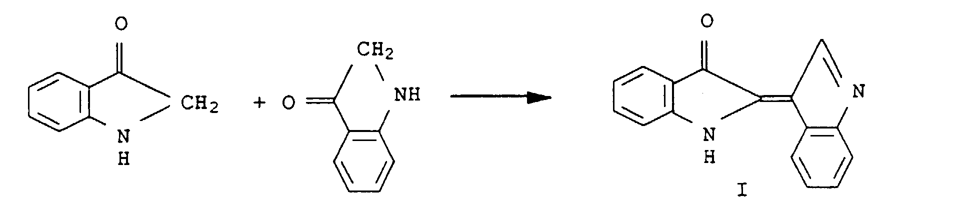

Für eine optimale Dampfstrippung der in der Indoxylatlösung vorhandenen Verunreinigungen werden 5 bis 30 Gew.-%, bevorzugt 10 Gew.-% der in der Indoxylatlösung vorhandenen Wassermenge bei einem Druck von 150 bis 450 hPa, bevorzugt 250 bis 350 hPa, entsprechend einer bevorzug-Strippungstemperatur von 65 bis 75°C abdestilliert, wobei die benötigte Wärmeenergie entweder von außen durch Heizung oder durch Einleitung von Wasserdampf in die Indoxylatlösung in 0,5 bis 5 Stunden, bevorzugt in 1 bis 2 Stunden, zugeführt wird.

Zur Durchführung einer optimalen Inertgasstrippung der Indoxylatlösung zur Abreicherung der aromatischen Amine werden bei 55 bis 90°C, bevorzugt bei 65 bis 80°C, 40 bis 120 l Inertgas pro l und Stunde, bevorzugt 60 bis 80 l, durch die Indoxylatlösung geleitet, wobei die Strippung 0,5 bis 5 Stunden, bevorzugt 1 bis 2 Stunden, beansprucht.

Der nach der Strippung der Indoxylatlösung durch Oxidation anfallende Indigo kann zur oxidativen Zerstörung der im Indigo vorhandenen weiteren Verunreinigungen mit einer 0,1 bis 10, vorzugsweise 3 gew.-%igen, verdünnt schwefelsauren Wasserstoffperoxidlösung bei 0 bis 90, vorzugsweise 20 bis 50°C, im Gewichtsverhältnis 1:10 bis 1:40, vorzugsweise 1:15 bis 1:35, behandelt werden, wobei die Schwefelsäurekonzentration 1 bis 10, vorzugsweise 5 Gew.-%, beträgt.

Das erfindungsgemäße Verfahren, welches diskontinuierlich oder kontinuierlich durchgeführt werden kann, führt man vorteilhaft so durch, daß man die im Verlauf der Indigoherstellung anfallende, etwa 85°C heiße, wäßrig alkalische Indoxylatlösung sofort mit Stickstoff abdeckt, möglichst schnell (in ungefähr 5 bis 15 Minuten) auf 65 bis 80°C abkühlt und dann bei dieser Temperatur entweder durch Destillation oder Einleiten von Dampf oder Inertgas strippt.

Der anschließend durch Oxidation der gestrippten Indoxylatlösung anfallende Indigo kann nach der Filtration, z.B. auf einer Nutsche mit der wäßrigen Wasserstoffperoxidlösung gewaschen werden.

Nach dem Neutralwaschen mit Wasser und Trocknen des Indigos (Reingehalt ≥ 96 %, fotometrisch gemessen), enthält dieser nur noch 0,01 bis 0,06 % Anilin und 0 bis 0,01 % N-Methylanilin.

Die folgenden Beispiele sollen das Verfahren näher erläutern.

### Beispiel 1

In einem Rührreaktor aus Glas mit aufgesetzter Destillationsapparatur werden 1000 g einer etwa 4 gew.-%igen, wäßrig alkalischen Indoxylatlösung vorgelegt. Unter Rühren werden in einer Stunde bei 65°C/250 hPa 100 g Wasser aus der durch ein Ölbad beheizten Indoxylatlösung abdestilliert. Nach Aufheben des Vakuums erfolgt die Oxidation der Indoxylatlösung in bekannter Weise bei 65 bis 85°C mit Luft. Der in einer Menge von 39,5 g (ber. trocken) erhaltene Indigo wird auf einer Nutsche filtriert und mit Wasser nahezu neutral gewaschen. Anschließend wäscht man den Farbstoff mit 1000 g einer wäßrigen Lösung von 20 bis 25°C, welche 5 Gew.-% Schwefelsäure und 3 Gew.-% Wasserstoffperoxid enthält. Nach dem Neutralwaschen wird der gereinigte Indigo getrocknet. Der Farbstoff hat einen Reingehalt von 96,5 %. Er enthält 0,02 % Anilin und 0 bis 0,002 % N-Methylanilin.

### Beispiel 2

In einem 2 l-Rührreaktor aus Glas mit aufgesetzter Destillationsapparatur werden 1000 g einer etwa 4 gew.-%igen, wäßrig alkalischen Indoxylatlösung vorgelegt. Bei 70°C/300 hPa leitet man unter Rühren in 1 Stunde 100 g Wasserdampf in die Indoxylatlösung ein, wobei ungefähr 95 g Wasser abdestillieren. Nach dem Aufheben des Vakuums erfolgt die Luftoxidation der Indoxylatlösung in bekannter Weise bei 70 bis 85°C. Anschließend wird verfahren wie bei Beispiel 1 beschrieben. Der Reingehalt des getrockneten Farbstoffes liegt bei 96,0 %. 0,02 % Anilin und 0 bis 0,002 % N-Methylanilin sind noch im Indigo vorhanden.

### Beispiel 3

In einem 2 l-Rührreaktor aus Glas mit aufgesetzter Destillationsapparatur und mit Ölbadbeheizung werden 1000 g einer ungefähr 4 gew.-%igen, wäßrig alkalischen Indoxylatlösung vorgelegt. Bei 75 bis 80°C werden unter Rühren in 2 Stunden 160 l Stickstoff durch die Indoxylatlösung geleitet, wobei etwa 75 g Wasser abdestillieren. Bei 80 bis 85°C erfolgt in bekannter Weise die Luftoxidation der Indoxylatlösung. Dann wird wie bei Beispiel 1 beschrieben weiter verfahren. Der Reingehalt des getrockneten Farbstoffes liegt bei 96,0 %. 0,03 % Anilin und 0 bis 0,002 % N-Methylanilin sind noch im Indigo vorhanden.

### Beispiel 4

Einer Destillationskolonne mit Gewebepackungen im Abtriebsteil (Packungshöhe = 1 m) wird bei einem Kopfdruck von 250 hPa etwa 4 gew.-%ige, wäßrig alkalische Indoxylatlösung von 65°C bis 70°C bei einer Zulaufmenge von 15 kg/h zugeführt. Im Gegenstrom werden stündlich 1,5 kg Wasserdampf in die Indoxylatlösung eingeleitet. Die am Kolonnenende ablaufende, dampfgestrippte Indoxylatlösung wird in bekannter Weise bei 65 bis 85°C mit Luft oxidiert. Der nach Oxidation von 1 kg Indoxylatlösung erhaltene Indigo wird auf einer Nutsche filtriert. Anschließend wird wie bei Beispiel 1 beschrieben weiter verfahren. Der Reingehalt des schließlich getrockneten Farbstoffes liegt bei 96,0 bis 97,0 %. Der Indigo enthält 0,01 % Anilin und 0 bis 0,001 % N-Methylanilin.

## Patentansprüche

1. Verfahren zur Herstellung von gereinigtem Indigo, dadurch gekennzeichnet, daß aus der bei der Synthese anfallenden wäßrig alkalischen Indoxylatlösung vor ihrer Oxidation zu Indigo unter Sauerstoffausschluß durch Destillation oder durch Einleiten von Wasserdampf oder Inertgas Verunreinigungen gestrippt werden und der anschließend durch Oxidation der gestrippten Indoxylatlösung anfallende Indigo mit verdünnter Wasserstoffperoxidlösung behandelt wird.

2. Verfahren gemäß Anspruch 1, dadurch gekennzeichnet, daß man die Strippung der Indoxylatlösung durch Destillation oder Einleiten von Wasserdampf oder Inertgas bei 55 bis 90°C, bevorzugt bei 65 bis 80°C, durchführt.

3. Verfahren gemäß Anspruch 1, dadurch gekennzeichnet, daß man die Strippung der Indoxylatlösung durch Destillation oder Einleiten von Wasserdampf bei einem Druck von 150 bis 450 hPa, bevorzugt von 250 bis 350 hPa, durchführt.

4. Verfahren gemäß Anspruch 1, dadurch gekennzeichnet, daß man im Verlaufe der Strippung 5 bis 30 Gew.-%, bevorzugt 10 Gew.-%, der in der Indoxylatlösung vorhandenen Wassermenge abdestilliert.

5. Verfahren gemäß Anspruch 1, dadurch gekennzeichnet, daß man für die Strippung der Indoxylatlösung durch Einleiten von Inertgas pro Volumenanteil der Indoxylatlösung 40 bis 120 Volumenteile Inertgas, bevorzugt 60 bis 80 Volumenteile, einleitet.

6. Verfahren gemäß Anspruch 1, dadurch gekennzeichnet, daß man die Strippung der Indoxylatlösung in 0,5 bis 5 Stunden, bevorzugt in 1 bis 2 Stunden, durchführt.

7. Verfahren gemäß Anspruch 1, dadurch gekennzeichnet, daß man den nach der Strippung und Oxidation der Indoxylatlösung hergestellten Farbstoff mit wäßrigschwefelsaurer 0,1 bis 10 gew.-%iger, bevorzugt 3 gew.-%iger Wasserstoffperoxidlösung im Gewichtsverhältnis 1:10 bis 1:40, bevorzugt 1:15 bis 1:35, behandelt.

8. Verfahren gemäß Anspruch 7, dadurch gekennzeichnet, daß man die Wasserstoffperoxidbehandlung von Indigo bei 10 bis 90°C, bevorzugt bei 20 bis 50°C, durchführt.

## Revendications

1. Procédé de préparation d'indigo purifié, caractérisé en ce que les impuretés de la solution aqueuse alcaline d'indoxylate produite par synthèse sont éliminées par entraînement, avant son oxydation en indigo, par distillation ou par introduction de vapeur d'eau ou de gaz inerte, en l'absence d'oxygène, et en ce que l'on traite, à l'aide d'une solution diluée d'hydroperoxyde, l'indigo produit ensuite par oxydation de la solution purifiée d'indoxylate.

2. Procédé selon la revendication 1, caractérisé en ce que l'on effectue la purification par entraînement de la solution d'indoxylate, par distillation ou introduction de vapeur d'eau ou de gaz inerte, à 55-90°C, de préférence à 65-80°C.

3. Procédé selon la revendication 1, caractérisé en ce que l'on effectue la purification par entraînement de la solution d'indoxylate, par distillation ou introduction de vapeur d'eau, à une pression de 150 à 450 hPa, de préférence de 250 à 350 hPa.

4. Procédé selon la revendication 1, caractérisé en ce que l'on élimine par distillation, lors de la purification par entraînement, 5 à 30% en poids, de préférence 10% en poids, de l'eau contenue dans la solution d'indoxylate.

5. Procédé selon la revendication 1, caractérisé en ce que l'on introduit 40 à 120 parties en volume de gaz inerte, de préférence 60 à 80 parties en volume, par partie en volume de solution d'indoxylate, pour la purification par entraînement de la solution d'indoxylate par introduction de gaz inerte.

6. Procédé selon la revendication 1, caractérisé en ce que l'on effectue la purification par entraînement de la solution d'indoxylate en 0,5 à 5 heures, de préférence en 1-2 heures.

7. Procédé selon la revendication 1, caractérisé en ce que l'on traite le colorant, obtenu après purification par entraînement et oxydation de la solution d'indoxylate, avec une solution d'hydroperoxyde sulfurique aqueux à 0,1 à 10% en poids, de préférence à 3% en poids, dans un rapport en poids de 1:10 à 1:40, de préférence 1:15 à 1:35.

8. Procédé selon la revendication 7, caractérisé en ce que l'on effectue le traitement de l'indigo avec la solution d'hydroperoxyde à 10-90°C, de préférence à 20-50°C.

## Claims

1. A process for preparing purified indigo, which comprises stripping the as-synthesized aqueous alkaline indoxylate solution before its oxidation to indigo of impurities in the absence of oxygen by distillation or by passing in steam or an inert gas and then treating the indigo precipitated on oxidation of the stripped indoxylate solution with dilute hydrogen peroxide solution.

2. A process as claimed in claim 1, wherein the stripping of the indoxylate solution is effected by distillation or by passing in steam or an inert gas at from 55 to 90°C, preferably at from 65 to 80°C.

3. A process as claimed in claim 1, wherein the stripping of the indoxylate solution is effected by distillation or by passing in steam at a pressure of from 150 to 450 hPa, preferably from 250 to 350 hPa.

4. A process as claimed in claim 1, wherein from 5 to 30% by weight, preferably 10% by weight, of the water present in the indoxylate solution is distilled off in the course of the stripping.

5. A process as claimed in claim 1, wherein, if the stripping of the indoxylate solution is to be effected by passing in an inert gas, from 40 to 120, preferably from 60 to 80, parts by volume of inert gas are passed in per part by volume of indoxylate solution.

6. A process as claimed in claim 1, wherein the stripping of the indoxylate solution is effected in the course of from 0.5 to 5 hours, preferably in the course of from 1 to 2 hours.

7. A process as claimed in claim 1, wherein the dye obtained on stripping and oxidizing the indoxylate solution is treated in a weight ratio of from 1:10 to 1:40, preferably from 1:15 to 1:35, with a from 0.1 to 10% strength by weight, preferably 3% strength by weight, hydrogen peroxide solution which has been acidified with aqueous sulfuric acid.

8. A process as claimed in claim 7, wherein the hydrogen peroxide treatment of indigo is carried out at from 10 to 90°C, preferably at from 20 to 50°C.
